(19) Europäisches Patentamt
European Patent Office
Office européen des brevets

(11) **EP 2 210 867 B1**

(12) **EUROPEAN PATENT SPECIFICATION**

(45) Date of publication and mention
of the grant of the patent:
**31.07.2013 Bulletin 2013/31**

(21) Application number: **08833382.8**

(22) Date of filing: **26.09.2008**

(51) Int Cl.:
*C04B 35/478* (2006.01)      *C04B 38/00* (2006.01)
*B01D 46/24* (2006.01)

(86) International application number:
**PCT/JP2008/067481**

(87) International publication number:
**WO 2009/041611 (02.04.2009 Gazette 2009/14)**

(54) **HONEYCOMB STRUCTURE AND PURIFICATION DEVICE USING THE HONEYCOMB STRUCTURE**

WABENSTRUKTUR UND REINIGUNGSVORRICHTUNG UNTER VERWENDUNG DER WABENSTRUKTUR

STRUCTURE EN NID D'ABEILLES ET DISPOSITIF DE PURIFICATION UTILISANT LA STRUCTURE EN NID D'ABEILLES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 JP 2007253767**

(43) Date of publication of application:
**28.07.2010 Bulletin 2010/30**

(73) Proprietors:
• **Kyocera Corporation**
**Kyoto-shi, Kyoto 612-8501 (JP)**
• **Honda Motor Co., Ltd.**
**Minato-ku**
**Tokyo 107-8556 (JP)**

(72) Inventor: **YAMAGUCHI, Shinichi**
**Kirishima-shi**
**Kagoshima 899-4396 (JP)**

(74) Representative: **Banzer, Hans-Jörg**
**Kraus & Weisert**
**Patent- und Rechtsanwälte**
**Thomas-Wimmer-Ring 15**
**80539 München (DE)**

(56) References cited:
EP-A1- 1 676 622      WO-A1-2005/005019
WO-A2-2008/005249      JP-A- 2005 270 969
JP-A- 2006 231 162      JP-A- 2006 334 459

**Description**

BACKGROUND OF THE INVENTION

Field of the Invention

The present invention relates to a honeycomb structure composed of ceramics. The present invention also relates to a honeycomb structure that captures particulates contained in a fluid such as an exhaust gas generated by internal combustion engines or boilers, and to a purifying apparatus using the same.

Description of the Related Art

For the purpose of capturing particulates containing carbon as a main component, that are contained in an exhaust gas generated by internal combustion engines (particularly particulates in an exhaust gas of diesel engines (diesel particulates)), a honeycomb structure composed of ceramics has hitherto been used.

This honeycomb structure has plural flow paths which are formed by being separated with a lattice-shaped partition wall composed of porous ceramics. Also, each flow path is alternately plugged in either one end or the other end of the honeycomb structure. Therefore, when the exhaust gas is introduced through an inlet of a filter and then discharged through an outlet, particulates in the exhaust gas is captured by the partition wall.

There are now required a honeycomb structure that is excellent in heat resistance and thermal shock resistance and is less likely to undergo thermal decomposition, and also exhibits stable mechanical properties even when subjected to a heat treatment, and a purifying apparatus using the same.

WO 2008/005249 A2, which constitutes prior art under Art. 54(3), (4) EPC only, discloses a ceramic article of composite cordierite aluminium titanate ceramic compositions and methods for the manufacture of the same. The ceramic article comprises a first crystalline phase comprised of a solid solution of aluminum titanate and magnesium dititanate and a second crystalline phase comprising cordierite.

EP 1 676 622 A1 discloses a honeycomb structural body which makes it possible to prevent occurrence of cracks, whereby the honeycomb structural body is a pillar-shaped honeycomb structural body mainly made of porous ceramics.

WO 2005/005019 A1 discloses a honeycomb filter according to the preamble of claim 1 for removing fine solid particles in an exhaust gas. The partition wall of the honeycomb filter comprises a non-stoichiometric magnesium aluminium titanate.

SUMMARY OF THE INVENTION

The present invention protein a honeycomb dependent claim define preferred embodiments of the invention.

The honeycomb structure according to the present invention has plural flow paths therein which are formed by being separated with a partition wall composed of ceramics, the flow paths extending from one end to the other end of the honeycomb structure and being alternately plugged in the one end and the other end by plugged portions. The partition wall includes magnesium aluminum titanate being a solid solution of stoichiometric magnesium aluminum titanate ($MgTi_2O_5$-$Al_2TiO_5$) and does not include cordierite.

The purifying apparatus according to the present invention includes the honeycomb structure described above, and a casing that accommodates the honeycomb structure and has an inlet port and an outlet port, wherein a fluid introduced through the inlet port of the casing is passed through the honeycomb structure and then discharged through the outlet port of the casing.

The honeycomb structure and the purifying apparatus are excellent in heat resistance and thermal shock resistance. Also, magnesium titanate ($MgTi_2O_5$) suppresses decomposition of aluminum titanate ($Al_2TiO_5$) at a high temperature. Furthermore, since $MgTi_2O_5$-$Al_2TiO_5$ is stoichiometric, a crystal is less likely to undergo mechanical strain as compared with a non-stoichiometric crystal. Therefore, even when subjected to a heat treatment, less change in mechanical properties arises before and after the heat treatment.

BRIEF DESCRIPTION OF THE DRAWINGS

Fig. 1 is a perspective view to explain a honeycomb structure according to one aspect of the present invention.
Fig. 2 is a sectional view taken along line B-B in Fig. 1.
Fig. 3 is a view to explain a honeycomb structure according to one aspect of the present invention, that is a plan view showing a portion of an input end face.

Fig. 4 is a view to explain a honeycomb structure according to one aspect of the present invention, that is a plan view showing a portion of an output end face.

Fig. 5 is a view to explain a honeycomb structure according to one aspect of the present invention, that is a plan view showing a portion of an input end face.

Fig. 6 is a view to explain a honeycomb structure according to one aspect of the present invention, that is a plan view showing a portion of an output end face.

Fig. 7 is a view to explain a honeycomb structure according to one aspect of the present invention, that is a plan view showing a portion of an input end face.

Fig. 8 is a view to explain a honeycomb structure according to one aspect of the present invention, that is a plan view showing a portion of an output end face.

Fig. 9 is a schematic sectional view to explain a purifying apparatus according to one aspect of the present invention.

Explanation of Letters or Numerals

1: Honeycomb structure
2: Flow paths
3: Plugged portion
4: Partition wall
5: Exhaust gas inlet port
6: Exhaust gas outlet port
7: Casing
8: Insulation material layer
9: Exhaust pipe
10: Purifying apparatus

DETAILED DESCRIPTION OF THE INVENTION

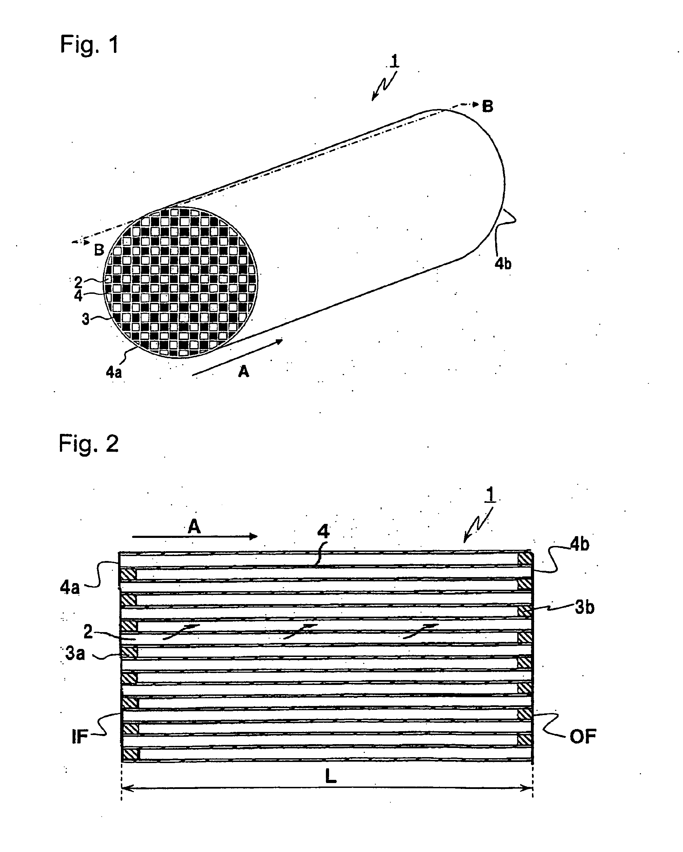

As shown in Figs. 1 and 2, a honeycomb structure 1 of the present embodiment has plural flow paths 2 that extend from one end 4a to the other end 4b of a porous partition wall 4 composed of ceramics. In other words, these flow paths 2 are, for example, formed by being separated with a lattice-shaped partition wall 4 elongated in a monoaxial direction (the direction indicated by arrow A in the drawing). Furthermore, the honeycomb structure 1 includes plugged portions 3 for alternately plugging the flow paths 2 in the one end or the other end of the honeycomb structure.

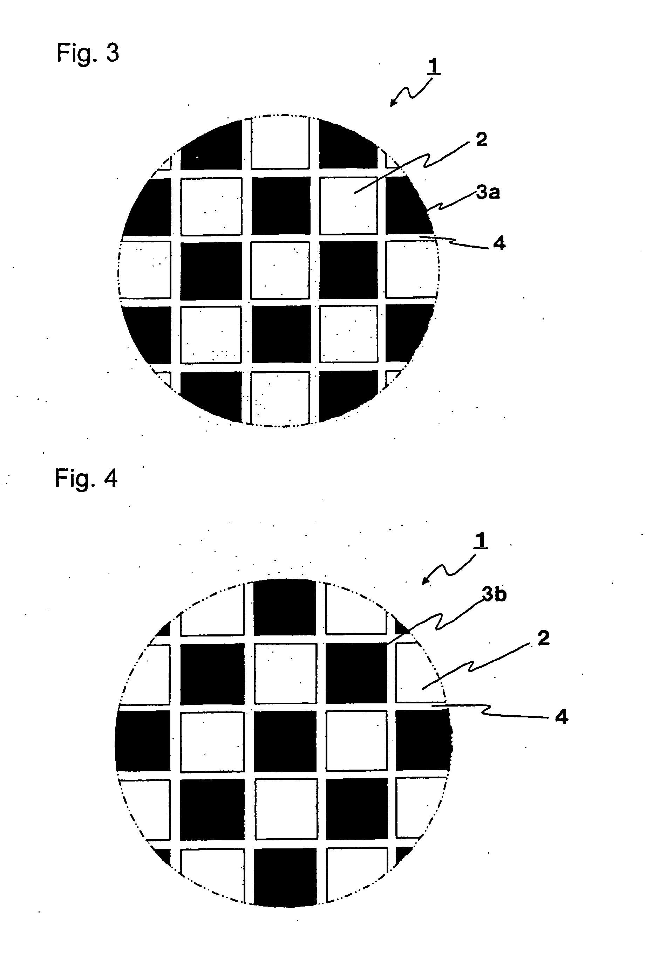

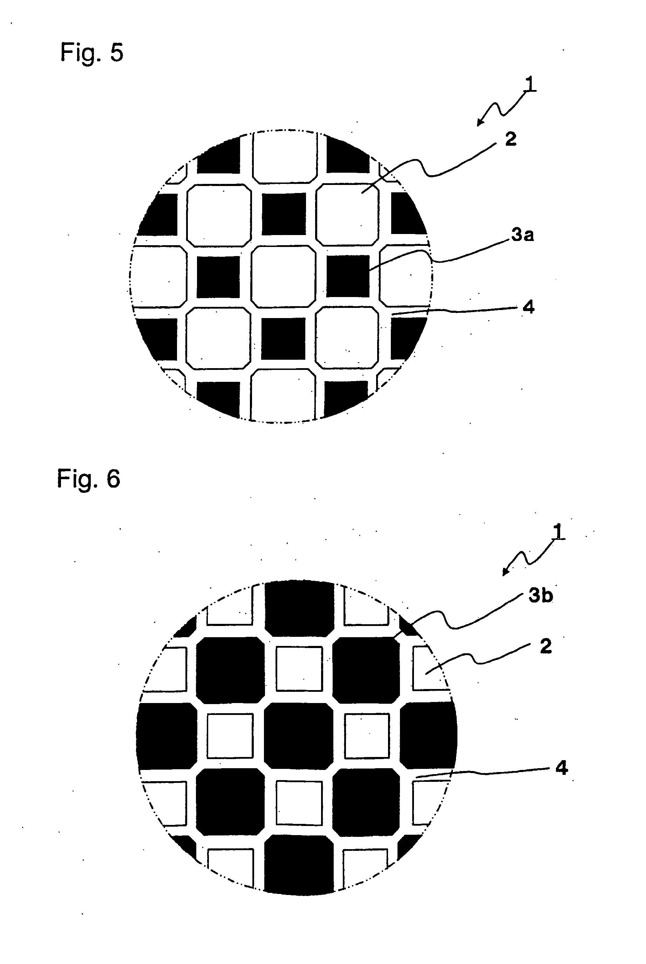

When one end (Fig. 3) and the other end (Fig. 4) of the honeycomb structure 1 are observed from planar views, any one of adjacent flow paths 2 is plugged by the plugged portions 3 (3a, 3b). As shown in Figs. 3 and 4, the plugged portions 3a, 3b are disposed, for example, in a checkered pattern. Also,

a plane shape of each flow path 2 may be any shape such as a circle shape, various square shapes, a tetragon shape with a corner portion having an arc shape, or a combined shape of a tetragon shape and an octagon shape. Also, flow paths 2 having different plane shapes may exist in one honeycomb structure 1. For example, the honeycomb structure 1 shown in Fig. 5 includes flow paths 2 having a tetragon shape as the plane shape, and other flow paths 2 having an octagon shape as the plane shape. A lot of flow paths 2 may have the alternately plugged portion and the pattern of the plugged portions is not limited to the checkered pattern.

As shown in Figs. 1 and 2, the entire honeycomb structure 1 has a cylindrical shape, and the outer diameter is from 100 to 200 mm and the length L in the monoaxial direction is from 100 to 250 mm. In a cross section vertical to the monoaxial direction (arrow A), the number of flow paths 2 is, for example, from 50 to 800 per square inch. The cross-sectional area of each flow path 2 in this cross section is, for example, from 1 to 10 mm$^2$. The thickness of a partition wall 4 by which each flow path 2 is partitioned (the thickness in the direction vertical to the axial direction) is, for example, from 0.05 to 1.0 mm.

The partition wall 4 includes a crystal of stoichiometric magnesium aluminum titanate ($MgTi_2O_5$-$Al_2TiO_5$). Herein, magnesium aluminum titanate is a solid solution and has a main peak at $2\theta$ of 25.5° to 26.5° in an X-ray diffraction chart.

Since the partition wall 4 is composed of a solid solution of stoichiometric magnesium aluminum titanate, magnesium titanate ($MgTi_2O_5$) suppresses decomposition of aluminum titanate ($Al_2TiO_5$) at a high temperature. Since both magnesium titanate and aluminum titanate are stoichiometric, mechanical strain generated in a crystal is suppressed as compared with a non-stoichiometric crystal. Therefore, even before and after the heat treatment, mechanical properties of the partition wall 4 are stable and the mechanical strength does not drastically decrease after the heat treatment.

The partition wall 4 may contain, as a minor component, oxides such as titanium oxide ($TiO_2$), potassium oxide

(K$_2$O), sodium oxide (Na$_2$O), magnesium oxide (MgO) and aluminum oxide (Al$_2$O$_3$). Of these minor components, the content of potassium oxide (K$_2$O) is preferably 0.2% by mass or less and that of sodium oxide (Na$_2$O) is preferably 0.9% by mass or less so as to obtain a preferred porous honeycomb structure. Each content of potassium oxide (K$_2$O) and sodium oxide (Na$_2$O) may be determined by X-ray fluorescence spectrometry or inductively coupled plasma (ICP) emission spectrometry. Specifically, with respect to potassium oxide (K$_2$O) and sodium oxide (Na$_2$O), each content of a metal element K or Na may be measured and expressed in terms of the oxide.

The composition of the crystal of the stoichiometric magnesium aluminum titanate (MgTi$_2$O$_5$-Al$_2$TiO$_5$) crystal and that of the minor component may be identified by an X-ray diffraction method. Also, the proportion of each component in the partition wall 4 may be determined by X-ray fluorescence spectrometry or inductively coupled plasma (ICP) emission spectrometry.

It is particularly preferred that the content of aluminum titanate (Al$_2$TiO$_5$) is from 60 to 70% by mass, and that of magnesium titanate (MgTi$_2$O$_5$) is from 16 to 26% by mass, balance being iron oxide (Fe$_2$O$_3$), based on 100% by mass of the components that constitute the partition wall 4.

Usually, aluminum titanate (Al$_2$TiO$_5$) is thermally decomposed at a temperature within a range from 850 to 1,280°C. Therefore, when the partition wall 4 is composed of ceramics containing aluminum titanate (Al$_2$TiO$_5$), the partition wall requires thermal shock resistance enough to prevent breakage even when thermal decomposition of the compound arises. Since the honeycomb structure 1 of the present embodiment contains magnesium titanate, thermal decomposition is suppressed, thus making it possible to attain a change ratio C$_R$ of the compression failure strength in which the value of an equation (1) shown below is low. In other words, the change ratio C$_R$ between before and after a heat treatment of the partition wall at a temperature of 1,200°C for 2 hours is 20 or less, the change ratio C$_R$ represented by the equation (1) shown below:

$$C_R = (|C_a - C_b|/C_a) \times 100 \qquad (1)$$

where

C$_a$: a compression failure strength (MPa) in the monoaxial direction (the direction A in Figs. 1 and 2) before the heat treatment

C$_b$: a compression failure strength (MPa) in the monoaxial direction after the heat treatment.

The compression failure strengths C$_a$, C$_b$ are measured, for example, in accordance to JASO M 505-87, and the change ratio C$_R$ may be determined by the equation (1). As the measuring sample, a cubic sample measuring 10 mm in each side obtained by hollowing from each honeycomb structure 1 may be used.

When the change ratio C$_R$ is 20 or less, decomposition of aluminum titanate (Al$_2$TiO$_5$) at a high temperature may be reduced, thus making it possible to maintain thermal shock resistance at a high level even when repeatedly used. Therefore, even when regeneration (honeycomb structure is converted into a regeneratable state by removing particulates captured by the partition wall 4 through incineration or back washing) of the honeycomb structure 1 is repeated, the honeycomb structure is not easily broken.

In the honeycomb structure 1 of the present embodiment, a proportion P$_R$ as a porosity defined by an equation (2) shown below is 84 or less, where a porosity of the plugged portion 3 is P$_s$ and a porosity of the partition wall 4 is P$_w$. Therefore, in the heat treatment that is performed for regeneration, the generation of cracks and melt loss in the boundaries between the partition wall 4 and the plugged portion 30 may be reduced.

$$P_R = (|P_w - P_s|/P_w) \times 100 \qquad (2)$$

When the proportion P$_R$ of the porosity represented by the equation (2) is 84 or less, a difference in shrinkage percentage between the partition wall 4 and the plugged portion 3 in the sintering step decreases. As a result, since stress concentration in the boundaries between the partition wall 4 and the plugged portion 3 is reduced, the thermal shock resistance of the honeycomb structure 1 is improved. Thus, the generation of cracks and melt loss in the boundaries between the partition wall 4 and the plugged portion 3 in the regeneration may be reduced. By adjusting the shrinkage percentage of the plugged portion 3 to be equivalent to that of the partition wall 4 in the firing step in advance, the generation of cracks in the boundaries between the partition wall 4 and the plugged portion 3 after firing is suppressed even when the plugged portion 3 and the partition wall 4 are integrally fired.

It is particularly preferred that the porosity (P$_w$) of the partition wall 4 is preferably adjusted to 30% or more and 60% or less, and the porosity (P$_s$) of the plugged portion 3 is preferably adjusted to 9.6% or more and 60% or less. These porosities (P$_w$), (P$_s$) may be measured using a mercury injection method.

When an input end face of the partition wall 4 is observed from planar view, the shape of the open portion of larger flow paths 2 may be, for example, an octagon shape having an area larger than that of the plugged portion as shown in Fig. 5. On the other hand, when an output end face of the partition wall 4 is observed from planar view, the shape of the open portion of smaller flow paths 2 may be, for example, a tetragon shape having an area smaller than that of the plugged portion as shown in Fig. 6. Contrary to the above-described shape of the open portions, the shape of the plugged portions in the flow paths 2 at the input end face side of the partition wall 4 may be a tetragon shape, and the shape thereof in the flow paths 2 at the output end face side may be an octagon shape..

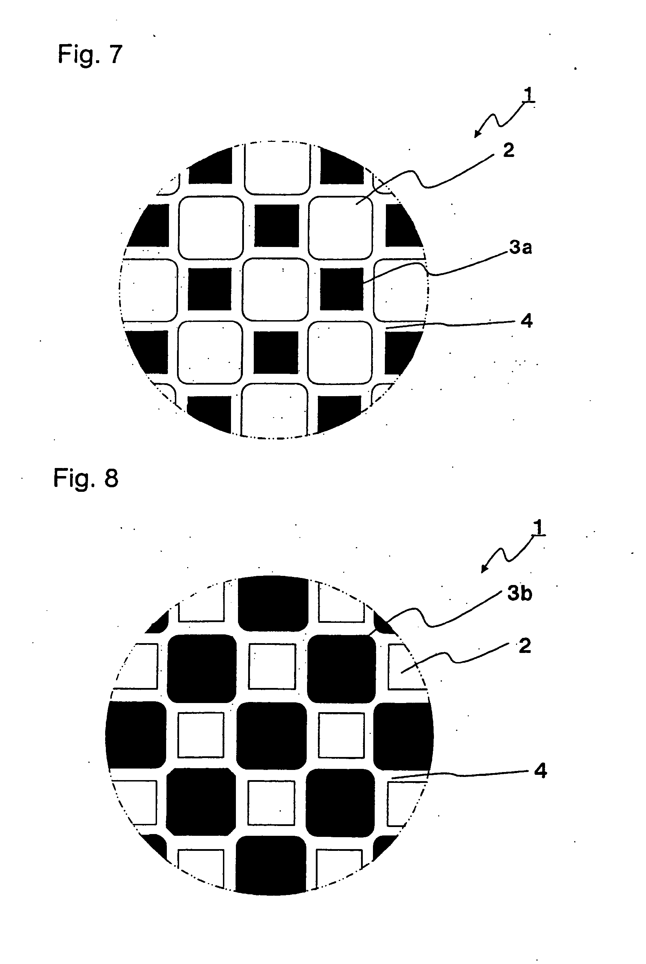

Also, when the input end face of the partition wall 4 is observed from planar view, the shape of the open portion of larger flow paths 2 may be, for example, a tetragon shape with a corner portion having an arc shape, having an area larger than that of the plugged portion as shown in Fig. 7. On the other hand, when an output end face of the partition wall 4 is observed from planar view, the shape of the open portion of smaller flow paths 2 may be a tetragon shape having an area smaller than that of the plugged portion as shown in Fig. 8. Contrary to the above-described shape of the open portion, the shape of the plugged portions in the flow paths 2 at the input end face side of the partition wall 4 may be a tetragon shape, and the shape thereof in the flow paths 2 at the output end face side may be, for example, a tetragon shape with a corner portion having an arc shape.

With such a configuration, as shown in Figs. 3 and 4, it is possible to increase the surface area of the partition wall 4 that captures particulates as compared with the case where the shape of flow paths 2 is only a tetragon shape, thus making it possible to increase the amount of particulates captured. Also, particulates may be satisfactorily captured by further increasing the opening area of flow paths 2.

It is particularly preferred that the hydraulic diameter of larger flow paths 2 in a tetragon shape with a corner portion having an arc shape is 1.55 times or more and 1.95 times or less that of smaller flow paths 2 having an area smaller than that of the above larger flow paths in Fig. 7. As described above, the amount of particulates captured may be increased by adjusting the ratio of the hydraulic diameter to 1.55 times or more. As used herein, the hydraulic diameter of flow paths 2 means a diameter of an inscribed circle contacted with the partition wall 4 when one end face of the partition wall 4 is observed from planar views, and may be measured using an optical microscope.

The method for producing a honeycomb structure 1 will be described below.
First, a mixed raw material is prepared. In order to obtain a honeycomb structure in which a partition wall 4 includes a crystal of stoichiometric magnesium aluminum titanate ($MgTi_2O_5$-$Al_2TiO_5$), it is necessary to control each mean particle size of titanium oxide ($TiO_2$), aluminum oxide ($Al_2O_3$) and magnesium oxide (MgO) as raw materials.

Titanium oxide ($TiO_2$) having a mean particle size of 1 to 10 $\mu$m and aluminum oxide ($Al_2O_3$) having a mean particle size of 1 to 10 $\mu$m are prepared. Then, 100 parts by mass of a component composed of titanium oxide ($TiO_2$) and aluminum oxide ($Al_2O_3$) at a molar ratio of titanium oxide ($TiO_2$) and aluminum oxide ($Al_2O_3$) ($TiO_2$:$Al_2O_3$ = 40 to 60:60 to 40) is mixed with 1 to 10 parts by mass of magnesium oxide (MgO) having a mean particle size of 1 to 10 $\mu$m and 1 to 10 parts by mass of silicon dioxide ($SiO_2$) to obtain a mixed raw material.

Herein, either an oxide having a spinel structure containing Mg, or an Mg-containing compound that is converted into MgO by firing may be used in place of magnesium oxide (MgO).
The change ratio ($C_R$) of the compression failure strength in the honeycomb structure is influenced by the content of silicon dioxide ($SiO_2$). In other words, the higher the content of silicon dioxide ($SiO_2$), the change ratio ($C_R$) becomes lower, whereas, the lower the content of silicon dioxide ($SiO_2$), the change ratio ($C_R$) becomes higher. From such a point of view, the content of silicon dioxide ($SiO_2$) in the mixed raw material is preferably adjusted within a range from 3 to 10 parts by mass so as to obtain a honeycomb structure in which the change ratio ($C_R$) is 20 or less.

To the mixed raw material obtained as described above, a predetermined amount of a pore-forming agent such as graphite, starch or a resin powder is added and, furthermore, a plasticizer, a thickener, a lubricant and water are added, followed by mixing using a universal mixer, a rotary mill or a type V mixer to obtain a mixture. This mixture is kneaded using a three-roll mill or a kneader to obtain a plasticized kneaded mixture.

Using a die, the resultant plasticized kneaded mixture is molded by an extrusion molding machine. The die to be used is a die that has an inner diameter that determine an outer diameter of a green compact is, for example, from 100 to 250 mm, and also has a slit for forming a partition wall 4 of a honeycomb structure 1. The kneaded mixture is charged in the extrusion molding machine mounted with this die, and then formed under pressure into a green compact having a honeycomb shape. Then, the green compact is dried and cut to a predetermined length.

The flow paths 2 of the green compact are alternately plugged in the one end or the other end. Some of plural flow paths 2 are selectively subjected to masking. At this time, the flow paths 2 to be masked are selected so that the flow paths 2 to be plugged are disposed in a checkered pattern. The masked output end face (the symbol OF in Fig. 2) is dipped in a slurry. flow paths 2 having the non-masked output end face (OF) are coated with a water-repelling resin inserted from the input end face (the symbol IF in Fig. 2) in advance, and pins with a tip having a flat shape are inserted into flow paths 2 from the input end face (IF), followed by drying at a normal temperature. Thus, plugged portions 3b are formed on the outlet side of the green compact. The pins are removed and the same operation as described above is carried out on the input side (IF) to form the plugged portions 3a on the input side of the green compact.

The green compact is then fired. The green compact is fired by maintaining at a temperature within a range from 1,250°C to 1,700°C for 0.5 hour to 5 hours using a firing furnace such as an electric furnace or a gas furnace.

Regarding the honeycomb structure 1 thus obtained, since magnesium titanate ($MgTi_2O_5$) and aluminum titanate ($Al_2TiO_5$) are stoichiometric, a crystal is less likely to undergo mechanical strain and it is possible to reduce a change in mechanical properties of the partition wall 4 before and after the heat treatment.

The honeycomb structure 1 thus obtained may efficiently capture particulates in a fluid over a long period of time.

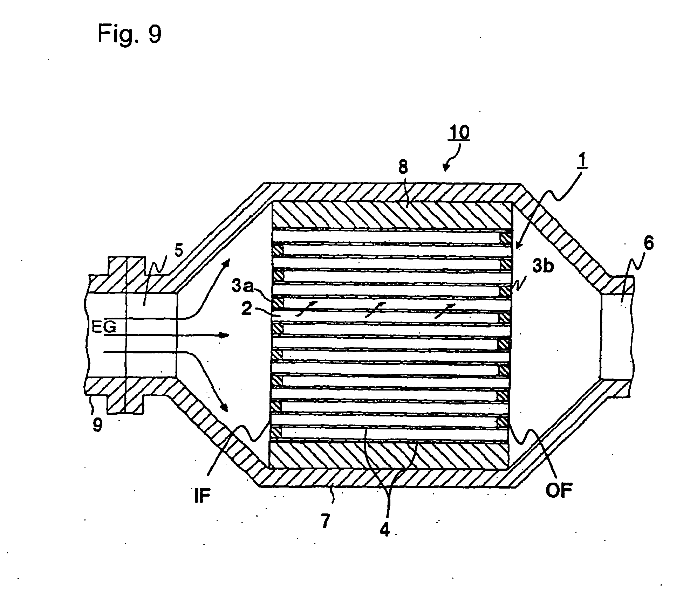

The case of using the honeycomb structure 1 of the present embodiment as a filter that captures diesel particulates in the exhaust gas of diesel engines (not shown) will be described below. As shown in Fig. 9, a purifying apparatus 10 of the present embodiment includes a honeycomb structure 1, and a casing 7 that accommodates the same therein. The casing 7 is, for example, made of metal such as stainless steel, and the center portion is formed in a cylindrical shape, while both end portions are formed in a truncated conical shape. The honeycomb structure 1 is accommodated in the center portion of the casing 7, and an inlet port 5 and an outlet port 6 of an exhaust gas (EG) are respectively formed at both end portions of the casing 7. An insulation material layer 8 composed of at least one kind of a ceramic fiber, a glass fiber, a carbon fiber and a ceramic whisker, that surrounds the side face of honeycomb structure 1, is formed inside the center portion of the casing 7. An exhaust pipe 9 is connected to the inlet port 5 of the casing 7. The exhaust gas (EG) is introduced into the casing 7 through an exhaust pipe 9.

When a diesel engine (not shown) runs and the exhaust gas (EG) is introduced into the casing 7 through the exhaust pipe 9, the exhaust gas (EG) is introduced into the flow paths 2 that are not plugged by the plugged portion 3a from the input end face (IF) of the honeycomb structure 1. In the flow paths 2 into which the exhaust gas (EG) has been introduced, the exhaust gas (EG) is prevented from flowing out since the end portion of the output end face (OF) is plugged by the plugged portion 3b. The exhaust gas (EG) that is prevented from flowing out passes through the porous partition wall 4 and is discharged through the adjacent flow paths 2 in which the output end face (OF) is not plugged by the plugged portion 3b. In the partition wall 4, diesel particulates contained in the exhaust gas (EG) are captured in pores therein. In other words, purified air is introduced into the adjacent flow paths 2. Since the end portion of the input end face (IF) side of the adjacent flow paths 2 is plugged, purified gas is not mixed with the exhaust gas (EG). In such a manner, the exhaust gas (EG) that has been introduced into the honeycomb structure 1 of the purifying apparatus 10 is purified into a state free from the diesel particulates and is discharged through the output end face (OF) to the outside.

In such a purifying apparatus 10, the honeycomb structure 1 of the present embodiment may be preferably used as a filter, and thus diesel particulates may be efficiently captured over a long period of time.

While an example using the exhaust gas as a fluid was described in the present embodiment, a liquid may also be used as the fluid. For example, tap water or sewerage may be used as the fluid, and also the purifying apparatus of the present embodiment may be applied for filtration of the liquid.

Example 1

First, 100 parts by mass of a component composed of titanium oxide X, titanium oxide Y and aluminum oxide at a molar ratio of 20:20:60 shown in Table 1 was mixed with 5 parts by mass of magnesium oxide (MgO) and 5 parts by mass of silicon dioxide ($SiO_2$) to obtain a mixed raw material.

To the mixed raw material thus obtained, a predetermined amount of graphite as a pore-forming agent was added. Furthermore, a plasticizer, a thickener, a lubricant and water were added, followed by mixing using a rotary mill to obtain a slurry. The slurry obtained by the rotary mill was kneaded using a kneader to obtain a plasticized kneaded mixture.

Next, the resultant plasticized kneaded mixture was charged in an extrusion molding machine mounted with a die that has an inner diameter that determine an outer diameter of a green compact is 250 mm, and also has a slit for forming a partition wall 4 of a honeycomb structure 1. The kneaded mixture was then formed under pressure into a green compact having a honeycomb shape. Then, the green compact was dried and cut to a predetermined length.

Some of flow paths 2 were subjected to masking so that the flow paths are disposed in a checkered pattern. The output end face (OF) was dipped in the slurry. Pins with a tip having a flat shape coated with a water-repelling resin were inserted into flow paths 2 from the input end face (IF), followed by drying at a normal temperature. Thus, plugged portions 3b were formed on the outlet side of the green compact. The pins were removed and the same operation as described above was carried out on the input side (IF) to form the plugged portions 3 on the input side of the green compact. In both plugged portions 3a, 3b, the same mixed raw material as that used to form the partition wall 4 was used.

The green compact was then fired at a temperature of 1,500°C for 4 hours using an electric furnace to obtain a honeycomb structure.

The composition of ceramics that constitute the partition wall 4 of the resultant honeycomb structure was identified using an X-ray diffraction method. The composition formulas are shown in Table 1.

As the measuring sample, twenty cubic samples (excluding the plugged portions 3a, 3b) each measuring 10 mm in each side were made by hollowing from each honeycomb structure 1. The compression failure strength in a monoaxial direction A of each sample was measured, and then the mean value and standard deviation of the measured values were calculated. The compression failure strength in the monoaxial direction A was measured in accordance with JASO M 505-87. The results are shown in Table 1.

Table 1

| Sample No. | Mixed raw material | | | | Partition wall | | Compression failure strength | |
|---|---|---|---|---|---|---|---|---|
| | Magnesium oxide | Titanium oxide X | Aluminum oxide | Titanium oxide Y | Magnesium titanate | Aluminum titanate | Mean value (MPa) | Standard deviation (MPa) |
| 1 | MgO | $TiO_2$ | $Al_2O_3$ | $TiO_2$ | $MgTi_2O_5$ | $Al_2TiO_5$ | 4.32 | 0.4 |
| 2 | MgO | $TiO_2$ | $Al_2O_3$ | $TiO_2$ | $Mg_{0.5}Ti_{1.5}O_5$ | $Al_2TiO_5$ | 3.82 | 0.6 |
| 3 | MgO | $TiO_2$ | $Al_2O_3$ | $TiO_{2.3}$ | $MgTi_2O_5$ | $AlTi_{1.5}O5$ | 3.77 | 0.6 |
| 4 | MgO | $TiO_2$ | $Al_2O_3$ | $TiO_{2.3}$ | $Mg_{0.5}Ti_{1.5}O_5$ | $AlTi_{1.5}O_5$ | 3.65 | 0.7 |

As is apparent from Table 1, all samples Nos. 2 to 4, in which at least one of magnesium titanate and aluminum titanate that constitutes the partition wall 4 is non-stoichiometric, exhibited the mean value of the compression failure strength of 3.82 MPa or less, and standard deviation of 0.6 MPa or more.

In contrast, sample No. 1, in which magnesium titanate and aluminum titanate are solid-soluted in a stoichiometric ratio, exhibited the mean value of the compression failure strength of 4.32 MPa, that was higher than those of samples Nos. 2 to 4. Furthermore, standard deviation of sample No. 1 was 0.4 MPa and was smaller than those of samples Nos. 2 to 4. As is apparent from these results, the honeycomb structure 1 containing stoichiometric magnesium titanate and aluminum titanate, like sample No. 1, is a honeycomb structure that is excellent in mechanical properties of the partition wall 4 and exhibits less variation in mechanical properties.

Example 2

Next, 100 parts by mass of a component composed of titanium oxide X, titanium oxide Y and aluminum oxide at a molar ratio of 20:20:60 (each having the same mean particle size of 5 $\mu$m) shown in Table 2 was mixed with 5 parts by mass of magnesium oxide (MgO) having a mean particle size of 5 $\mu$m and 5 parts by mass of silicon dioxide ($SiO_2$) to obtain a mixed raw material.

Then, a honeycomb structure was produced in the same manner as in Example 1.

The composition of ceramics that constitute the plugged portion 3 of the resultant honeycomb structure was identified using an X-ray diffraction method. The composition formulas are shown in Table 2.

In order to observe the state of bonding between the plugged portion 3 and the partition wall 4, light was irradiated from the direction of an axis A using a fiber scope. Light does not permeate through the end face when there is no gap between the plugged portion 3 and the partition wall 4, while light permeates through the end face when there a gap between the plugged portion 3 and the partition wall 4. The honeycomb structure in which light permeation through the end face was partially confirmed was rated "confirmed", whereas, the honeycomb structure in which light permeation through the end face was not confirmed was rated "unconfirmed". The results are shown in Table 2.

Table 2

| Sample No. | Mixed raw material | | | | Plugged portion | | Gap |
|---|---|---|---|---|---|---|---|
| | Magnesium oxide | Titanium oxide X | Aluminum oxide | Titanium oxide Y | Magnesium titanate | Aluminum titanate | |
| 5 | MgO | $TiO_2$ | $Al_2O_3$ | $TiO_2$ | $MgTi_2O_5$ | $Al_2TiO_5$ | Unconfirmed |
| 6 | MgO | $TiO_2$ | $Al_2O_3$ | $TiO_2$ | $Mg_{0.5}Ti_{1.5}O_5$ | $Al_2TiO_5$ | Confirmed |
| 7 | MgO | $TiO_2$ | $Al_2O_3$ | $TiO_{2.3}$ | $MgTi_2O_5$ | $AlTi_{1.5}O_5$ | Confirmed |
| 8 | MgO | $TiO_2$ | $Al_2O_3$ | $TiO_{2.3}$ | $Mg_{0.5}Ti_{1.5}O_5$ | $AlTi_{1.5}O_5$ | Confirmed |

As is apparent from Table 2, in samples Nos. 6 to 8 in which both magnesium titanate and aluminum titanate that constitute the plugged portion 3 are non-stoichiometric, a gap was confirmed. In contrast, in sample No. 5 in which both magnesium titanate and aluminum titanate that constitute the plugged portion 3 are stoichiometric, a gap was not confirmed. As is apparent from these results, the honeycomb structure 1 containing stoichiometric magnesium titanate and aluminum titanate, like sample No. 5, is a honeycomb structure having high capturing efficiency.

Example 3

First, 100 parts by mass of a component composed of titanium oxide and aluminum oxide at a molar ratio $TiO_2:Al_2O_3$ of 40:60 was mixed with 5 parts by mass of magnesium oxide (MgO) and silicon dioxide ($SiO_2$) (the content is shown in Table 3) to obtain a mixed raw material.

A honeycomb structure was produced from the resultant mixed raw material in the same manner as in Example 1. The compression failure strength in the direction of an axis A of a cubic sample measuring 10 mm in each side obtained by hollowing from each honeycomb structure was measured. This measured value is shown in Table 3 as $C_a$.

Also, the honeycomb structure was subjected to a heat treatment at a temperature of 1,200°C for 2 hours. The compression failure strength in the direction of an axis A of a cubic sample measuring 10 mm in each side obtained by hollowing from each honeycomb structure 1 was measured. This measured value is shown in Table 3 as $C_b$. The change ratio ($C_R$) of the compression failure strength was calculated from the compression failure strengths $C_a$, $C_b$ in the monoaxial direction (the direction an axis A).

Another honeycomb structure obtained in the same manner was placed in an electric furnace and then allowed to stand at a constant temperature for 1 hour. Then, the honeycomb structure was taken out in the atmosphere at room temperature (24°C). A difference in temperature between the constant temperature at which cracks were confirmed in the honeycomb structure and room temperature (24°C) is shown in Table 4 as a thermal shock-resistant temperature.

Table 3

| Sample No. | Mixed raw material | Compression failure strength | | $C_R$ (%) | Number of regeneratable times (times) |
|---|---|---|---|---|---|
| | Content of silicon dioxide (parts by mass) | $C_a$ (MPa) | $C_b$ (MPa) | | |
| 9 | 3 | 5.08 | 4.40 | 15.5 | 769 |
| 10 | 6 | 5.22 | 4.41 | 18.4 | 761 |
| 11 | 10 | 5.14 | 4.28 | 20.0 | 755 |
| 12 | 12 | 5.13 | 4.18 | 22.7 | 738 |

As is apparent from Table 3, as compared with sample No. 12 (number of regeneratable times: 738 times) in which the change ratio ($C_R$) of the compression failure strength exceeds 20, samples Nos. 9 to 11, in which the change ratio ($C_R$) of the compression failure strength is 20 or less, exhibited higher thermal shock-resistant temperature and also exhibited large number of regeneratable times of 755 times or more. As is apparent from these results, the honeycomb structure 1 in which the change ratio ($C_R$) of the compression failure strength is 20 or less, like sample Nos 9 to 11 is a honeycomb structure that is excellent in thermal shock resistance.

Example 4

$TiO_2$ having a mean particle size of 5 $\mu$m and $Al_2O_3$ having a mean particle size of 5 $\mu$m were prepared. 100 parts by mass of a component composed of titanium oxide and aluminum oxide at a molar ratio $TiO_2:Al_2O_3$ of 40:60 was mixed with 5 parts by mass of magnesium oxide (MgO) having a mean particle size of 5 $\mu$m and 5 parts by mass of silicon dioxide ($SiO_2$) to obtain a mixed raw material.

Then, a honeycomb structure was produced in the same manner as in Example 1. The porosity of the plugged portions 3a, 3b was adjusted by the volume ratio of graphite as a pore-forming agent. The volume ratio of graphite is shown in Table 4.

The resultant honeycomb structure was placed in an electric furnace and then allowed to stand at a constant temperature for 1 hour. Then, the honeycomb structure was taken out in the atmosphere at room temperature (24°C). A difference in temperature between the constant temperature at which cracks were confirmed in the honeycomb structure and room temperature (24°C) is shown in Table 4 as a thermal shock-resistant temperature.

Also, the porosities ($P_s$), ($P_w$) of the plugged portion 3 and the partition wall 4 were measured by a mercury injection method, and the measured values and the proportion ($P_R$) calculated by the measured values are shown in Table 4.

Table 4

| Sample No. | Hole-forming agent | Porosity | | $P_R$ (%) | Thermal shock-resistant temperature (°C) |
|---|---|---|---|---|---|
| | Graphite (volume %) | $P_s$ (%) | $P_w$ (%) | | |
| 13 | 0 | 8.4 | 60.0 | 86.0 | 720 |
| 14 | 2 | 9.6 | 60.0 | 84.0 | 760 |
| 15 | 3 | 10.2 | 60.0 | 83.0 | 765 |
| 16 | 10 | 18.5 | 60.0 | 69.2 | 765 |
| 17 | 15 | 23.5 | 60.0 | 60.8 | 770 |

As is apparent from Table 4, as compared with sample No. 13 (thermal shock-resistant temperature: 720°C) in which the proportion ($P_R$) exceeds 84, samples Nos. 14 to 17, in which the proportion ($P_R$) is 84 or less, exhibited higher thermal shock-resistant temperature of 760°C or higher. As is apparent from these results, the honeycomb structural bodies 1 having a porosity $P_R$ of 84 or less, like samples Nos. 14 to 17, are honeycomb structural bodies that are excellent in thermal shock resistance.

**Claims**

1. A honeycomb structure (1) in which plural flow paths (2) are formed by being separated with a partition wall (4) composed of ceramics, the flow paths (2) extending from one end (4a) to the other end (4b) of the honeycomb structure (1) and being alternately plugged in the one end (4a) and the other end (4b) by plugged portions (3; 3a, 3b), wherein the partition wall (4) includes magnesium aluminum titanate, **characterized in that**
   the partition wall (4) includes magnesium aluminum titanate being a solid solution of stoichiometric magnesium aluminum titanate ($MgTi_2O_5$-$Al_2TiO_5$) and does not include cordierite.

2. The honeycomb structure (1) according to claim 1, wherein the flow paths (2) have a tetragon shape with a corner portion having an arc shape from a planar view of one end face of the partition wall (4).

3. The honeycomb structure (1) according to claim 1, wherein the flow paths (2) have a tetragon shape and an octagon shape from a planar view of one end face of the partition wall (4).

4. A purifying apparatus (10) comprising:

   the honeycomb structure (1) according to any one of claims 1 to 3, and
   a casing (7) that accommodates the honeycomb structure (1) and has an inlet port (5) and an outlet port (6), wherein a fluid introduced through the inlet port (5) of the casing (7) is passed through the honeycomb structure (1) and then discharged through the outlet port (6) of the casing (7).

**Patentansprüche**

1. Wabenstruktur (1), in welcher mehrere Strömungswege (2) durch eine aus Keramik bestehende Trennwand (4) voneinander getrennt ausgebildet sind, wobei die Strömungswege (2) sich von einem Ende (4a) zu dem anderen Ende (4b) der Wabenstruktur (1) erstrecken und abwechselnd in dem einen Ende (4a) und dem anderen Ende (4b) durch Verschlussabschnitte (3; 3a, 3b) verschlossen sind, wobei die Trennwand (4) Magnesiumaluminiumtitanat beinhaltet,
   **dadurch gekennzeichnet,**
   **dass** die Trennwand (4) Magnesiumaluminiumtitanat als eine feste Lösung von aus stöchiometrischem Magnesiumaluminiumtitanat ($MgTi_2O_5$-$Al_2TiO_5$) aufweist und nicht Cordierit beinhaltet.

**2.** Wabenstruktur (1) gemäß Anspruch 1, wobei die Strömungswege (2) eine viereckige Form mit einem Eckenabschnitt aufweisen, welcher von einer planaren Ansicht von einer Endfläche der Trennwand (4) eine Bogenform aufweist.

**3.** Wabenstruktur (1) nach Anspruch 1, wobei die Strömungswege (2) eine viereckige Form und eine achteckige Form von einer planaren Ansicht von einer Endfläche der Trennwand (4) aufweisen.

**4.** Reinigungsvorrichtung (10) umfassend:

die Wabenstruktur (1) nach einem der Ansprüche 1 bis 3, und
ein Gehäuse (7), welches die Wabenstruktur (1) beherbergt, und einen Eingangsanschluss (5) und einen Ausgangsanschluss (7) aufweist,
wobei eine Flüssigkeit, welche durch den Eingang (5) des Gehäuses (7) eingeführt wird, die Wabenstruktur (1) durchläuft und dann durch den Ausgangsanschluss (6) des Gehäuses (7) austritt.

**Revendications**

**1.** Structure en nid d'abeilles (1) dans laquelle des trajets d'écoulement multiples (2) sont formés en étant séparés par une paroi de séparation (4) composée de céramique, les trajets d'écoulement (2) s'étendant d'une extrémité (4a) à l'autre extrémité (4b) de la structure en nid d'abeilles (1) et étant bouchés de façon alternée dans l'une extrémité (4a) et l'autre extrémité (4b) par des parties bouchées (3 ; 3a, 3b), la paroi de séparation (4) comprenant du titanate de magnésium-aluminium, **caractérisée en ce que**
la paroi de séparation (4) comprenant du titanate de magnésium-aluminium étant une solution solide de titanate de magnésium-aluminium stoechiométrique (MgTi$_2$O$_5$-Al$_2$TiO$_5$) et ne comprenant pas de cordiérite.

**2.** Structure en nid d'abeilles (1) selon la revendication 1, dans laquelle les trajets d'écoulement (2) ont une forme tétragonale avec une partie de coin ayant une forme arquée depuis une vue plane d'une face d'extrémité de la paroi de séparation (4).

**3.** Structure en nid d'abeilles (1) selon la revendication 1, dans laquelle les trajets d'écoulement (2) ont une forme tétragonale et une forme octogonale depuis une vue plane d'une face d'extrémité de la paroi de séparation (4).

**4.** Appareil de purification (10) comprenant :

la structure en nid d'abeilles (1) selon l'une quelconque des revendications 1 à 3, et
un boîtier (7) qui contient la structure en nid d'abeilles (1) et un orifice d'entrée (5) et un orifice de sortie (6),
dans lequel un fluide introduit par l'orifice d'entrée (5) du boîtier (7) est passé à travers la structure en nid d'abeilles (1) puis évacué par l'orifice de sortie (6) du boîtier (7).

Fig. 1

Fig. 2

Fig. 3

Fig. 4

## Fig. 5

## Fig. 6

**Fig. 7**

**Fig. 8**

## Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008005249 A2
- EP 1676622 A1
- WO 2005005019 A1